# EUROPEAN PATENT SPECIFICATION

(11) **EP 4 164 322 B1**
(45) Date of publication and mention of the grant of the patent: **06.05.2026**
(21) Application number: 21821245.4
(22) Date of filing: 02.03.2021
(51) Int. Cl.: H04W 72/21

(54) **DATA TRANSMISSION METHOD, AND TERMINAL, BASE STATION AND COMPUTER-READABLE STORAGE MEDIUM**
DATENÜBERTRAGUNGSVERFAHREN UND ENDGERÄT, BASISSTATION UND COMPUTERLESBARES SPEICHERMEDIUM
PROCÉDÉ DE TRANSMISSION DE DONNÉES, TERMINAL, STATION DE BASE ET SUPPORT DE STOCKAGE LISIBLE PAR ORDINATEUR

(30) Priority: 09.06.2020 CN 202010518136
(43) Date of publication of application: 12.04.2023
(73) Proprietor: ZTE Corporation, Shenzhen, Guangdong 518057 (CN)
(72) Inventor: XIAO, Rencai, Shenzhen, Guangdong 518057 (CN)
(74) Representative: Zoli, Filippo
(86) International application number: PCT/CN2021/078694
(87) International publication number: WO 2021/248940

(56) References cited:
- WO-A1-2019/151819
- CN-A- 107 809 801
- CN-A- 109 088 704
- CN-A- 110 113 818
- CN-A- 112 242 893
- US-A1- 2020 007 274
- INTEL CORPORATION: "Quality report in Msg3 and connected mode for eMTC", vol. RAN WG1, no. Reno, USA; 20190513 - 20190517, 4 May 2019 (2019-05-04), pages 1 - 6, XP051708807, Retrieved from the Internet <URL:http://www.3gpp.org/ftp/tsg%5Fran/WG1%5FRL1/TSGR1%5F97/Docs/R1%2D1906771%2Ezip> [retrieved on 20190504]

## Description

### TECHNICAL FIELD

Embodiments of the present disclosure relate to the technical field of communication, and more particularly, to a data transmission method, a terminal device, and a computer-readable storage medium.

### BACKGROUND

The Narrow Band Internet of Things (NB-IOT) is a new narrow band Internet of Things with low power consumption, wide coverage and massive supported connections.

Compared with the conventional mobile networks, the Physical Uplink Control Channels (PUCCHs) are cancelled in the NB-IOT system. Consequently, when a terminal device state or downlink channel quality of a terminal device is changed after the terminal device accesses the eNodeB (base station), the terminal device cannot notify relevant information to the base station timely, so that the base station cannot better optimize scheduling.

WO 2019/151819 A1 relates to a communication method and system for converging a 5th-Generation (5G) communication system for supporting higher data rates beyond a 4th-Generation (4G) system with a technology for Internet of Things (IoT).

INTEL CORPORATION: "Quality report in Msg3 and connected mode for eMTC", XP051708807, relates to the designs for the support of DL quality report in Msg3 in Idle mode.

US 2020/007274 A1 relates to systems and methods for generating and decoding messages including header extensions. It can be determined that a header extension is required for signaling a LCID value. A MAC sub-header including an indicator that the LCID value is extended can be generated and transmitted. A received message including a header extension can be decoded appropriately.

### SUMMARY

The invention is set out in the appended set of claims.

The summary of the subject matter described herein will be given below.

The embodiments of the present disclosure provide a data transmission method, a terminal device and a computer-readable storage medium.

### BRIEF DESCRIPTION OF DRAWINGS

The accompanying drawings are provided for a further understanding of the technical schemes of the present disclosure and constitute a part of the description. The accompanying drawings are used in conjunction with the embodiments of the present disclosure to illustrate the technical schemes of the present disclosure.
FIG. 1 is a schematic diagram of a system architecture platform for executing a data transmission method;
FIG. 2 is a flowchart of a data transmission method according to a claimed embodiment;
FIG. 3 is a flowchart of a data transmission method according to a claimed embodiment;
FIG. 4 is a flowchart of a data transmission method according to another embodiment of the present disclosure;
FIG. 5 is a schematic diagram of a message structure in the data transmission method according to an embodiment of the present disclosure;
FIG. 6 is a schematic diagram of a message header of the message structure in the data transmission method according to an embodiment of the present disclosure;
FIG. 7 is a schematic diagram of a message structure in the data transmission method according to another embodiment of the present disclosure;
FIG. 8 is a schematic diagram of a message structure in the data transmission method according to another embodiment of the present disclosure;
FIG. 9 is a schematic diagram of a message structure in the data transmission method according to another embodiment of the present disclosure;
FIG. 10 is a schematic diagram of a message structure in the data transmission method according to another embodiment of the present disclosure;
FIG. 11 is a flowchart of a data transmission method according to another embodiment of the present disclosure; and
FIG. 12 is a flowchart of a data transmission method according to another embodiment of the present disclosure.

### DETAILED DESCRIPTION

To make the objectives, technical schemes and advantages of the present disclosure clear, the present disclosure will be further described below in details with reference to the accompanying drawings. It should be understood that the specific embodiments described herein are merely used for illustrating the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

The claimed embodiments of the present disclosure provide a data transmission method, a terminal device, and a computer-readable storage medium. When the terminal device state or downlink channel quality after the terminal device accesses the base station is changed, the terminal device can acquire related scheduling auxiliary information and carry the scheduling auxiliary information through a transport block. By transmitting the transport block to the base station through a physical uplink shared channel, the scheduling auxiliary information in the transport block can be notified to the base station, such that the base station can better allocate a scheduling resource to the terminal device according to the scheduling auxiliary information.

The embodiments of the present disclosure will be further described below with reference to the accompanying drawings.

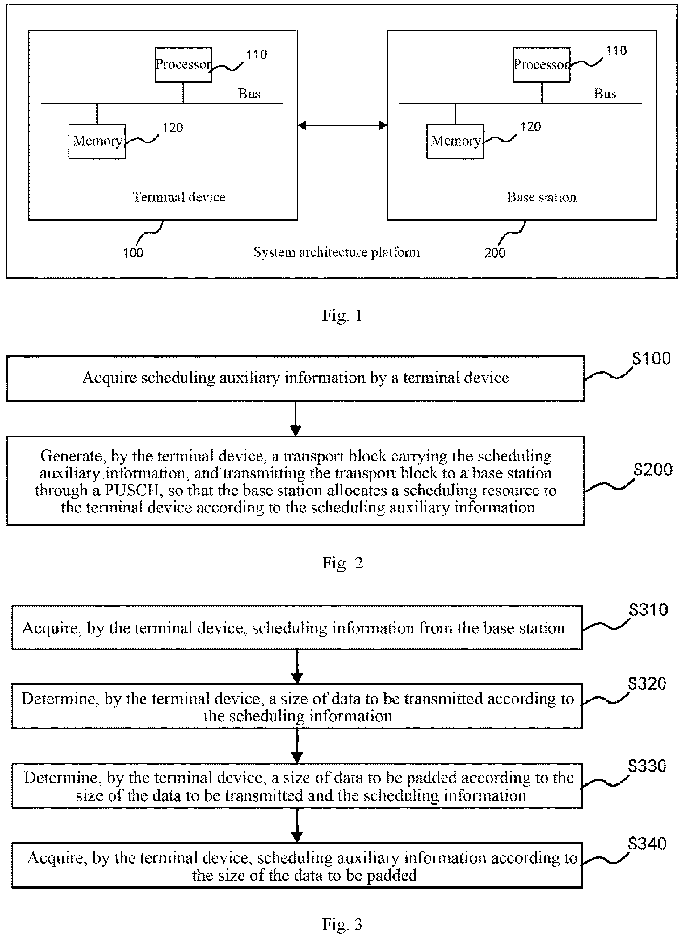

As shown in FIG. 1, FIG. 1 is a schematic diagram of a system architecture platform for executing a data transmission method according to an embodiment of the present disclosure. In the example of FIG. 1, the system architecture platform includes a terminal device 100 and a base station 200. Each of the terminal device 100 and the base station 200 is provided with a memory 110 and a processor 120, and the memory 110 and the processor 120 may be connected via a bus or in other ways. In FIG. 1, the memory 110 and the processor 120 being connected via a bus is taken as an example.

As a non-transient computer-readable storage medium, the memory 110 may be configured to store non-temporary software programs and non-transient computer-executable programs. In addition, the memory 110 may include high-speed random access memories, or may include non-transient memories, such as at least one disk memory device, a flash memory device or other non-transient solid-state memory devices. In some implementations, the memory 110 may include memories remotely arranged relative to the processor 120. These remote memories may be connected to this system architecture platform via a network. Examples of the network include, but not limited to, the Internet, an Intranet, a local area network, a mobile communication network and combinations thereof.

In some cases, the NB-IOT is an important branch of the Internet of Things. The NB-IOT is built on a cellular network with a consumption of only about 180kHz bandwidth, and can be directly deployed on a Global System for Mobile Communications (GSM) network, a Universal Mobile Telecommunications System (UMTS) network or a Long Term Evolution (LTE) network to reduce the deployment cost and realize a smooth upgrade.

Compared with conventional mobile networks, the NB-IOT system reduces the types of uplink physical channels, and redesigns some uplink physical channels, including a Narrowband Physical Random Access Channel (NPRACH) and a Narrowband Physical Uplink Shared Channel (NPUSCH); however, Physical Uplink Control Channels (PUCCHs) in the LTE physical layer are discarded.

For PUCCHs, in the LTE system, the PUCCHs may be used to transmit Channel Quality Indications (CQIs), Precoding Matrix Indexes (PMIs), Rank Indicators (RIs) or other information, and configured to notify the eNodeB of the downlink channel quality. However, since the NB-IOT system does not support PUCCHs, a terminal device in the NB-IOT system cannot notify the eNodeB of the downlink channel quality timely, so that the eNodeB cannot better optimize scheduling.

Secondly, for the NB-IOT system of the 3GPP Release-14 standard, the terminal device can report the number of repetitions of Narrowband Physical Downlink Control Channels (NPDCCHs) through a Message (MSG) 3, and report the Reference Signal Receiving Power (RSRP), Reference Signal Receiving Quality (RSRQ) or other measurement information through an MSG 5. Therefore, the reported information content is limited, and there are no specific reporting routes after accessing.

Therefore, in view of the above, in the system architecture platform provided in the example of FIG. 1, when a terminal device state or downlink channel quality of the terminal device 100 is changed after the terminal device 100 accesses the base station 200, the terminal device 100 may acquire related scheduling auxiliary information, and generate a corresponding transport block according to the scheduling information transmitted by the base station 200 to carry the CQI, PMI, RI, the number of repetitions of NPDCCHs, RSRP, RSRQ or other scheduling auxiliary information. By transmitting the transport block to the base station 200 through a Physical Uplink Shared Channel (PUSCH), the scheduling auxiliary information in the transport block can be notified to the base station 200, such that the base station 200 can allocate a scheduling resource to the terminal device according to the scheduling auxiliary information, thereby better optimizing scheduling.

It should be understood by those having ordinary skills in the art that the system architecture platform may be applied to 3G communication network systems, LTE communication network systems, 5G communication network systems, and subsequent evolved mobile communication network systems, etc., which will not be specifically limited in this embodiment.

It should be understood by those having ordinary skills in the art that the system architecture platform shown in FIG. 1 does not constitute any limitations to the embodiments of the present disclosure, and more or less components than those shown, or combinations of some components, or different component arrangements may be included.

In the system architecture platform shown in FIG. 1, the processor 120 may call a data transmission program stored in the memory 110, to carry out the data transmission method.

Based on the above system architecture platform, various embodiments of the data transmission method of the present disclosure are provided below.

FIG. 2 is a flowchart of a data transmission method according to a claimed embodiment.

As shown in FIG. 2, the data transmission method includes following steps of S100 and S200.

At S100, a terminal device acquires scheduling auxiliary information.

In an embodiment, the scheduling auxiliary information is used for assisting the base station in optimizing scheduling, and may include, but not limited to, downlink measurement information, first information indicating a terminal device capability, second information indicating a data transmission characteristic, and scheduling information applied for by the terminal device.

The downlink measurement information includes, but not limited to, RSRP, RSRQ, CQI, PMI, RI, Signal to Interference plus Noise Ratio (SINR), and the like.

As for the first information indicating a terminal device capability, the terminal device capability includes, but not limited to, terminal device capabilities described in the 3GPP protocol. Therefore, the base station can know the terminal device capability indicated in the first information by analyzing the first information.

As for the second information indicating a data transmission characteristic, the data transmission characteristic includes, but not limited to, an uplink data transmission interval and a transmission period. Therefore, the base station can know the data transmission characteristic indicated in the second information by analyzing the second information.

The scheduling information applied for by the terminal device is scheduling information that the terminal device suggests the base station to issue. The scheduling information applied for by the terminal device includes, but not limited to, the number of repetitions of Physical Downlink Control Channels (PDCCHs), the number of repetitions of Narrowband Physical Downlink Shared Channels (NPDSCHs), an Modulation and Coding Scheme (MCS) level, the number of Resource Units (RUs), an aggregation level, and the like.

At S200, the terminal device generates a transport block carrying the scheduling auxiliary information, and transmits the transport block to a base station through a Physical Uplink Shared Channel (PUSCH), such that the base station allocates a scheduling resource to the terminal device according to the scheduling auxiliary information.

In an embodiment, after the terminal device receives the scheduling information transmitted by the base station, the terminal device may include the scheduling auxiliary information to be transmitted to the base station in the transport block to be generated by the terminal device. Since the transport block may be transmitted to the base station through the PUSCH, the scheduling auxiliary information included in the transport block can be smoothly notified to the base station, such that the base station can optimize the subsequently transmitted scheduling resource according to the acquired scheduling auxiliary information. It is to be noted that, the scheduling auxiliary information obtained by the terminal device may be obtained by the terminal device based on the scheduling information transmitted by the base station, for example, the downlink measurement information being obtained according to downlink data information; or, may be obtained by the terminal device based on other situations, for example, the data transmission characteristic being obtained according to uplink data, the terminal device capability and the scheduling information suggested by the terminal device being obtained according to the terminal device state, and the like.

In addition, it is to be noted that, when the data transmission method is applied to the NB-IOT system, the PUSCH is correspondingly a Narrowband Physical Uplink Shared Channel (NPUSCH).

It should be understood that the data transmission method in this embodiment of the present disclosure can be applied not only to NB-IOT systems, but also to LTE systems, NR systems, and the like.

In addition, as shown in FIG. 3, in the claimed embodiment, S100 includes following steps of S310, S320, S330 and S340.

At S310, the terminal device acquires scheduling information from the base station.

At S320, the terminal device determines a size of data to be transmitted according to the scheduling information.

At S330, the terminal device determines a size of data to be padded according to the size of the data to be transmitted and the scheduling information.

At S340, the terminal device acquires scheduling auxiliary information according to the size of the data to be padded.

In an embodiment, the terminal device will acquire the scheduling information transmitted by the base station, and determine the size of the data to be transmitted according to the scheduling information, where the data to be transmitted includes uplink data and uplink control information to be transmitted by the terminal device. Since a transport block size (TBSize) scheduled by the base station is generally greater than an actual data size of the uplink data and uplink control information, redundant data bits in the transport block to be generated by the terminal device will be padded with padding data, where a padding region refers to the data bits to be padded with the padding data. Therefore, in the embodiment of the present disclosure, the scheduling auxiliary information may be padded to the padding region, such that the transport block carries the scheduling auxiliary information and the scheduling auxiliary information is transmitted to the base station through a PUSCH. Since the terminal device may pad the scheduling auxiliary information to the padding region, the data size of the scheduling auxiliary information should be less than or equal to the data size that can be padded in the padding region. Therefore, in the embodiment of the present disclosure, the TBSize may be determined according to the scheduling information, the size of the padding data is determined according to the TBSize and the data size of the uplink data and uplink control information to be reported by the terminal device, and the scheduling auxiliary information with a proper size is selected according to the size of the padding data.

It is to be noted that, since the TBSize scheduled by the base station is generally greater than the actual data size of the uplink data and uplink control information, a waste of resources will be caused. Moreover, in the current 3GPP protocol, the padding data is used only when a padding Buffer Status Report (BSR) is reported, and is mostly unused in other situations, thereby resulting in a great waste. Therefore, in this embodiment of the present disclosure, by padding the scheduling auxiliary information into the padding region, not only is the transport block allowed to carry the scheduling auxiliary information and the scheduling auxiliary information transmitted to the base station through a PUSCH, but also the utilization of resources can be optimized. In addition, it should be understood that, since the NB-IOT system only has a bandwidth of 180K, air interface resources will be produced; however, the terminal device in the embodiment of the present disclosure can report the scheduling auxiliary information to the base station by means of the uplink padding data, so that the air interface resources are fully utilized to improve the utilization of air interface resources.

It should be understood that, in addition to padding the scheduling auxiliary information into the padding region in the above way, the scheduling auxiliary information may also be padded into a data region in the transport block, which also enables the transport block to carry the scheduling auxiliary information and the scheduling auxiliary information to be transmitted to the base station through a PUSCH.

It is to be noted that, before S310 is executed, the terminal device will transmit scheduling request information to the base station, so that the base station transmits the scheduling information to the terminal device according to the scheduling request information.

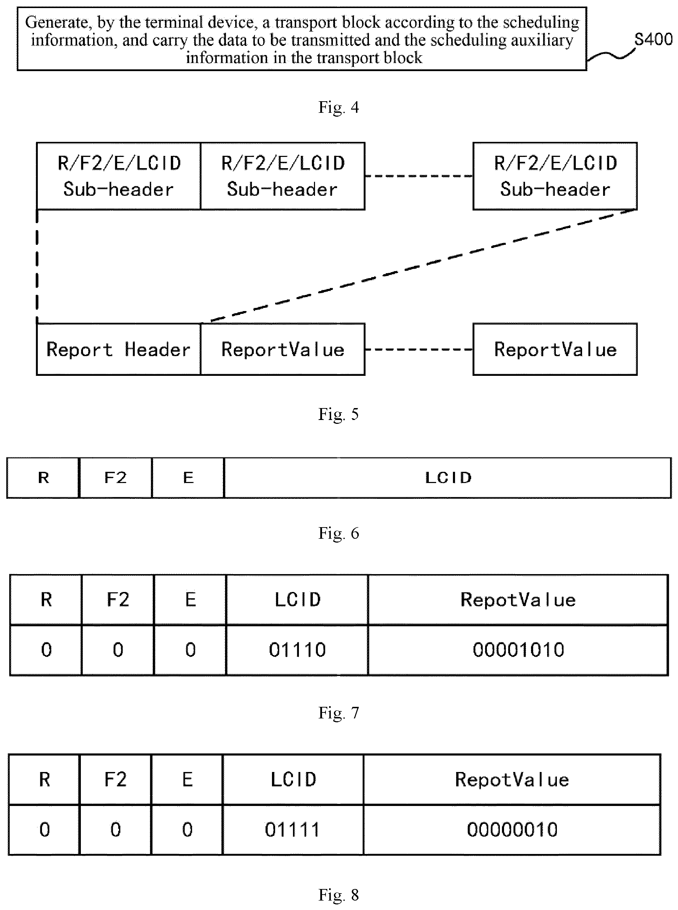

In addition, as shown in FIG. 4, in an embodiment, generating, by the terminal device, a transport block carrying the scheduling auxiliary information at S200 includes, but not limited to, a following step S400.

At S400, the terminal device generates a transport block according to the scheduling information, and carries the data to be transmitted and the scheduling auxiliary information in the transport block.

In an embodiment, after the terminal device determines the data to be padded and acquires the scheduling auxiliary information, the terminal device will generate, according to the TBSize scheduled by the base station, a transport block having a corresponding size and carrying the data to be transmitted and the scheduling auxiliary information. Since the transport block can be transmitted to the base station through a PUSCH, the scheduling auxiliary information included in the transport block can be smoothly notified to the base station, such that the base station can optimize the subsequently transmitted scheduling resource according to the acquired scheduling auxiliary information.

As shown in FIGS. 5 and 6, in an embodiment, the scheduling auxiliary information may be organized in the transport block according to a message structure in a certain format. The message structure includes, but not limited to, a message header and a message body. One message header and one message body each occupy 1 byte, and each message header corresponds to one message body. The message body is provided with a first field, e.g., a ReportValue field in FIG. 5. In addition, the message header (e.g., the Report Header in FIG. 5) is provided with a second field, a third field, a fourth field and a reserved field, which correspond to a Logical Channel Identifier (LCID) field, an E field, an F2 field and a R field in FIGS. 5 and 6, respectively. In this message structure, the fields are illustrated as follows.

ReportValue: a first field configured to be padded with the scheduling auxiliary information. In an embodiment, this field may be padded with a specific value or a corresponding index.

LCID: a second field configured to be padded with first data, where the first data may be configured to indicate a type of the scheduling auxiliary information padded in the first field.

E: a third field configured to be padded with second data, where in the case where there are more than two message headers, the second data may be configured to indicate a position sequence of the more than two message headers.

F2: a fourth field configured to be padded with third data, where the third data may be configured to indicate whether a change state of a data size of the scheduling auxiliary information padded in the first field is a static state.

R: a reserved field for future use.

It is to be noted that, the message header in FIGS. 5 and 6 adopts the message header in the 3GPP protocol, where the LCID field is used to indicate the type of the specifically reported scheduling auxiliary information by extending the definition of the 3GPP UL-SCH LCID, i.e., by extending the Reserved field.

The following description will be given by four examples.

In an embodiment, as shown in FIG. 7, when the CQI is reported separately, the first data in the corresponding LCID field takes the reserved value of 01110 in the LCID defined by UL-SCH. When the value of the CQI is 10, in this message structure, the fields are illustrated as follows.

ReportValue: a first field, which is padded with 00001010 in a binary mode to indicate a numerical value of 10, and configured to indicate that the specific value of the CQI is 10.

LCID: a second field, which is padded with the first data of 01110 and configured to indicate that the type of the scheduling auxiliary information padded in the ReportValue field is CQI.

E: a third field. Since the CQI is reported separately, there is only one message header, and no other data follows, so that the value of the second data padded in the E field is 0.

F2: a fourth field. Since the reported data size is fixed, the value of the third data padded in the F2 field is 0.

R: a reserved field for future use.

In an embodiment, as shown in FIG. 8, in the process of reporting the transmission characteristic or terminal device capability of the terminal device, for example, it is reported whether the mobility of the terminal device is high-speed, low-speed or static currently. In order to distinguish the mobility of the terminal device, the value of the scheduling auxiliary information is 2 when it is in a high-speed mode; the value of the scheduling auxiliary information is 1 when it is in a low-speed mode; and the value of the scheduling auxiliary information is 0 when it is in a static mode. In addition to the above distinguishing method, making the scheduling auxiliary information take specific values may also be used for distinguishing. In the process of reporting the mobility of the terminal device, the first data in the corresponding LCID field takes the reserved value of 01111 in the LCID defined by UL-SCH. When it is in the high-speed mode, in this message structure, the fields are illustrated as follows.

ReportValue: a first field, which is padded with 00000010 in a binary mode to indicate a numerical value of 2, and is configured to indicate that the mobility of the terminal device is the high-speed mode currently.

LCID: a second field, which is padded with the first data of 01111 and configured to indicate that the type of the scheduling auxiliary information padded in the ReportValue field is the mobility of the terminal device.

E: a third field. Since the mobility of the terminal device is reported separately, there is only one message header, and no other data follows, so that the value of the second data padded in the E field is 0.

F2: a fourth field. Since the reported data size is fixed, the value of the third data padded in the F2 field is 0.

R: a reserved field for future use.

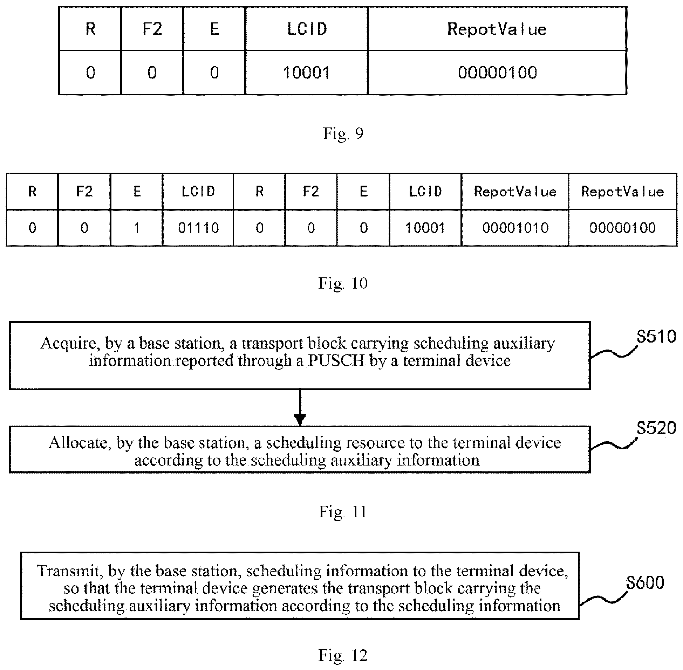

In an embodiment, as shown in FIG. 9, when the scheduling information applied for by the terminal device, for example the number of repetitions of PDCCHSs, is reported, the first data in the corresponding LCID field takes the reserved value of 10001 in the LCID defined by UL-SCH. When the value of the number of repetitions of PDCCHs is 4, in this message structure, the fields are illustrated as follows.

ReportValue: a first field, which is padded with 00000100 in a binary mode to indicate a numerical value of 4, and is configured to indicate that the number of repetitions of PDCCHs applied for by the terminal device is 4.

LCID: a second field, which is padded with the first data of 10001 and configured to indicate that the type of the scheduling auxiliary information padded in the ReportValue field is the number of repetitions of PDCCHs applied for by the terminal device.

E: a third field. Since the number of repetitions of PDCCHs applied for by the terminal device is reported separately, there is only one message header, and no other data follows, so that the value of the second data padded in the E field is 0.

F2: a fourth field. Since the reported data size is fixed, the value of the third data padded in the F2 field is 0.

R: a reserved field for future use.

In an embodiment, as shown in FIG. 10, when both the CQI and the number of repetitions of PDCCHs are reported, the first data in the two corresponding LCID fields respectively takes the reserved values of 01110 and 10001 in the LCID defined by UL-SCH. When the value of the CQI is 10 and the value of the number of repetitions of PDCCHs is 4, in this message structure, the fields are illustrated as follows.

ReportValue: first fields. Since two types of scheduling auxiliary information (i.e., the CQI and the number of repetitions of PDCCHs) are reported, two ReportValue fields are provided. The first ReportValue field is padded with 00001010 in a binary mode to indicate a numerical value of 10, and configured to indicate that the specific value of the CQI is 10. The second ReportValue field is padded with 00000100 in a binary mode to indicate a numerical value of 4, and configured to indicate that the value of the number of repetitions of PDCCHs applied for by the terminal device is 4.

LCID: second fields. Since two types of scheduling auxiliary information (i.e., the CQI and the number of repetitions of PDCCHs) are reported, two message headers are provided, and two LCID fields are correspondingly provided. The first LCID field is padded with the first data of 01110 and configured to indicate that the type of the scheduling auxiliary information padded in the first ReportValue field is CQI. The second LCID field is correspondingly padded with the first data of 10001 and configured to indicate that the type of the scheduling auxiliary information padded in the second ReportValue field is the number of repetitions of PDCCHs applied for by the terminal device.

E: third fields. Since two types of scheduling auxiliary information (i.e., the CQI and the number of repetitions of PDCCHs) are reported, two message headers are provided, and two E fields are correspondingly provided. In order to indicate the position sequence of the two message headers, the value of the second data padded in the first E field is 1, and the value of the second data padded in the second E field is 0.

F2: fourth fields. Since two types of scheduling auxiliary information (i.e., the CQI and the number of repetitions of PDCCHs) are reported, two message headers are provided, and two F2 fields are correspondingly provided. Since the reported data size is fixed, the value of the third data padded in both the first F2 field and the second F2 field is 0.

R: reserved fields for further use. Since two types of scheduling auxiliary information (i.e., the CQI and the number of repetitions of PDCCHs) are reported, two message headers are provided, and two R fields are correspondingly provided.

FIG. 11 is a flowchart of a data transmission method according to a non-claimed embodiment of the present disclosure. As shown in FIG. 11, the data transmission method includes, but not limited to, steps of S510 and S520.

At S510, a base station acquires a transport block carrying scheduling auxiliary information reported through a Physical Uplink Shared Channel (PUSCH) by a terminal device.

At S520, the base station allocates a scheduling resource to the terminal device according to the scheduling auxiliary information.

In an embodiment, after the terminal device receives the scheduling information transmitted by the base station, the terminal device may include the scheduling auxiliary information to be transmitted to the base station in the transport block corresponding to the scheduling information. Since the transport block can be transmitted to the base station through a PUSCH, the base station can smoothly acquire the scheduling auxiliary information arranged in the transmission block, and optimize the subsequently transmitted scheduling resource according to the acquired scheduling auxiliary information.

It is to be noted that the implementations and corresponding technical effects of the data transmission method in this embodiment of the present disclosure may refer to the embodiments of the above data transmission method.

In addition, as shown in FIG. 12, in an embodiment, prior to S510, the data transmission method further includes, but not limited to, a step of S600.

At S600, the base station transmits scheduling information to the terminal device, so that the terminal device generates the transport block carrying the scheduling auxiliary information according to the scheduling information.

In an embodiment, the base station transmits the scheduling information to the terminal device, and the terminal device acquires the scheduling information transmitted by the base station and determines the size of the data to be transmitted according to the scheduling information, where the data to be transmitted includes uplink data and uplink control information to be transmitted by the terminal device. Since the TBSize scheduled by the base station is generally greater than an actual data size of the uplink data and uplink control information, redundant data bits in the transport block to be generated by the terminal device will be padded with padding data, where a padding region refers to the data bits to be padded with the padding data. Therefore, in the embodiment of the present disclosure, the scheduling auxiliary information may be padded to the padding region, so that the transport block carries the scheduling auxiliary information and the scheduling auxiliary information is transmitted to the base station through a PUSCH. Since the terminal device may pad the scheduling auxiliary information to the padding region, the data size of the scheduling auxiliary information should be less than or equal to the data size that can be padded in the padding region. Therefore, in the embodiment of the present disclosure, the TBSize may be determined according to the scheduling information, the size of the padding data is determined according to the TBSize and the data size of the uplink data and uplink control information to be reported by the terminal device, and the scheduling auxiliary information with a proper size is selected according to the size of the padding data.

It is to be noted that the implementations and corresponding technical effects of the data transmission method in this embodiment of the present disclosure may refer to the embodiments of the above data transmission method.

Based on the above data transmission method, various embodiments of the terminal device, the base station and the computer-readable storage medium of the present disclosure will be given below.

In addition, a claimed embodiment of the present disclosure provides a terminal device. The terminal device includes: a memory, a processor and a computer program stored on the memory and executable by the processor.

The processor and the memory may be connected via a bus or in other ways.

It is to be noted that, the terminal device in this embodiment can be applied to the system architecture platform in the embodiment shown in FIG. 1 and can constitute a part of the system architecture platform in the embodiment shown in FIG. 1, which belong to the same inventive concept and have the same implementation principles and beneficial effects, and will not be described in detail here.

The non-transient software program and instruction required to implement the data transmission method in the above embodiments are stored in the memory which, when executed by the processor, cause the processor to implement the data transmission method in the above embodiments, for example, to implement the above-described steps S100 and S200 in the method of FIG. 2, steps S310 to S340 in the method of FIG. 3 and step S400 in the method of FIG. 4.

In addition, an embodiment of the present disclosure further provides a base station. The base station includes: a memory, a processor and a computer program stored on the memory and executable by the processor.

The processor and the memory may be connected via a bus or in other ways.

It is to be noted that, the base station in this embodiment can be applied to the system architecture platform in the embodiment shown in FIG. 1 and can constitute a part of the system architecture platform in the embodiment shown in FIG. 1, which belong to the same inventive concept and have the same implementation principles and beneficial effects, and will not be described in detail here.

The non-transient software program and instruction required to implement the data transmission method in the above embodiments are stored in the memory which, when executed by the processor, cause the processor to implement the data transmission method in the above embodiments, for example, to implement the above-described steps S510 to S520 in the method of FIG. 11 and step S600 in the method of FIG. 12.

The device embodiments described above are only illustrative. The units described as separate components may be or may not be physically separated from each other, that is, they may be located in one place or may be distributed on a plurality of network units. Some or all of the modules may be selected according to actual needs to achieve the objectives of the schemes of the embodiments.

In addition, a claimed embodiment of the present disclosure further provides a computer-readable storage medium storing a computer-executable instruction which, when executed by a processor, causes the processor to implement the above data transmission method. For example, the computer-executable instruction, when executed by one processor in the above terminal device embodiment, causes the processor to implement the data transmission method in the above embodiments, for example, to implement the steps S100 and S200 in the method of FIG. 2, steps S310 to S340 in the method of FIG. 3 and step S400 in the method of FIG. 4. For another example, the computer-executable instruction, when executed by one processor in the above base station embodiment, causes the processor to implement the data transmission method in the above embodiments, for example, to implement the above-described steps S510 to S520 in the method of FIG. 11 and step S600 in the method of FIG. 12.

In accordance with the claimed data transmission method, the terminal device, and the computer-readable storage medium provided in the embodiments of the present disclosure, the scheduling auxiliary information can be transmitted to the base station timely, so that the base station can optimize scheduling according to the scheduling auxiliary information.

According to the embodiments of the present disclosure, a terminal device acquires scheduling auxiliary information; and, the terminal device generates a transport block carrying the scheduling auxiliary information, and transmits the transport block to a base station through a Physical Uplink Shared Channel (PUSCH), so that the base station allocates a scheduling resource to the terminal device according to the scheduling auxiliary information. In accordance with the technical schemes provided in the embodiments of the present disclosure, when the terminal device state or downlink channel quality is changed after the terminal device accesses the base station, the terminal device can acquire the scheduling auxiliary information, and generate a transport block carrying the scheduling auxiliary information. Since the transport block can be transmitted to the base station through a PUSCH, the scheduling auxiliary information carried by the transport block can be transmitted to the base station. Therefore, the embodiments of the present disclosure provide a route through which the scheduling auxiliary information can be transmitted to the base station, such that the base station can allocate a scheduling resource to the terminal device according to the scheduling auxiliary information, thereby optimizing scheduling.

It should be understood by those having ordinary skills in the art that all or some of the steps in the methods disclosed above and the systems disclosed above may be implemented as software, firmware, hardware and suitable combinations thereof. Some or all of the physical components may be implemented as software executed by processors such as central processors, digital signal processors or microprocessors, or implemented as hardware, or implemented as integrated circuits such as application-specific integrated circuits. Such software may be distributed on computer-readable mediums, and the computer-readable mediums may include computer storage mediums (or non-temporary mediums) and communication mediums (or temporary mediums). As is well-known to those having ordinary skills in the art, the term "computer storage medium" includes volatile or non-volatile and removable or non-removable mediums implemented in any method or technology used to store information (such as computer-readable instructions, data structures, program modules or other data). The computer storage medium may include, but not limited to, RAMs, ROMs, EEPROMs, flash memories and other memory technologies, CD-RMs, digital versatile disks (DVDs) or other optical disk storages, magnetic cassettes, magnetic tapes, magnetic disk storages or other magnetic storage devices, or any other mediums that can be used to store desired information and can be accessed by computers. In addition, as is well-known to those having ordinary skills in the art, the communication medium generally includes computer-readable instructions, data structures, program modules or other data in modulation data signals such as carriers or other transmission mechanisms, and may include any information transfer medium.

## Claims

1. A data transmission method, comprising:
acquiring, by a terminal device, scheduling auxiliary information (S100); and
generating, by the terminal device, a transport block carrying the scheduling auxiliary information, and transmitting the transport block to a base station through a Physical Uplink Shared Channel, PUSCH, so that the base station allocates a scheduling resource to the terminal device according to the scheduling auxiliary information (S200);
**characterized in that**,
acquiring, by a terminal device, scheduling auxiliary information (S100) comprises:
acquiring, by the terminal device, scheduling information from the base station (S310);
determining, by the terminal device, a size of data to be transmitted according to the scheduling information (S320);
determining, by the terminal device, a size of data to be padded according to the size of the data to be transmitted and the scheduling information (S330); and
acquiring, by the terminal device, scheduling auxiliary information according to the size of the data to be padded (S340).

2. The data transmission method of claim 1, wherein generating, by the terminal device, a transport block carrying the scheduling auxiliary information comprises:
generating, by the terminal device, the transport block according to the scheduling information, and carrying the data to be transmitted and the scheduling auxiliary information in the transport block (S400).

3. The data transmission method of claim 1, wherein:
the transport block is provided with a message body, the message body is provided with a first field, and the scheduling auxiliary information is arranged in the first field.

4. The data transmission method of claim 3, wherein:
the transport block is further provided with a message header corresponding to the message body, the message header is provided with a second field, and the second field is provided with first data configured to indicate a type of the scheduling auxiliary information.

5. The data transmission method of claim 4, wherein:
more than two message headers are provided, the message header is further provided with a third field, and the third field is provided with second data configured to indicate a position sequence of the more than two message headers.

6. The data transmission method of any one of claims 1 to 5, wherein the scheduling auxiliary information comprises at least one of downlink measurement information, first information indicating a terminal device capability, second information indicating a data transmission characteristic, or scheduling information applied for by the terminal device.

7. A terminal device (100), comprising: a memory (120), a processor (110) and a computer program stored on the memory (120) and executable by the processor (110) which, when executed by the processor (110), causes the processor (110) to carry out the data transmission method of any one of claims 1 to 6.

8. A computer-readable storage medium storing a computer-executable instruction which, when executed by a processor, causes the processor to carry out the data transmission method of any one of claims 1 to 6.

## Patentansprüche

1. Datenübertragungsverfahren, umfassend:
Erfassen, durch ein Endgerätevorrichtung, von Zeitplanungszusatzinformationen (S100); und
Erzeugen, durch die Endgerätevorrichtung, eines Transportblocks, der die Zeitplanungszusatzinformationen trägt, und Übertragen des Transportblocks an eine Basisstation durch einen gemeinsam genutzten physikalischen Uplink-Kanal, PUSCH, sodass die Basisstation der Endgerätevorrichtung eine Zeitplanungsressource gemäß den Zeitplanungszusatzinformation zuweist (S200);
**dadurch gekennzeichnet, dass**
ein Erfassen, durch ein Endgerätevorrichtung, von Zeitplanungszusatzinformationen (S100) Folgendes umfasst:
Erfassen, durch die Endgerätevorrichtung, von Zeitplanungsinformationen von der Basisstation (S310);
Bestimmen, durch die Endgerätevorrichtung, einer Größe von Daten, die gemäß den Zeitplanungsinformation übertragen werden sollen (S320);
Bestimmen, durch die Endgerätevorrichtung, einer Größe von aufzufüllenden Daten gemäß der Größe der zu übertragenden Daten und den Zeitplanungsinformationen (S330); und
Erfassen, durch die Endgerätevorrichtung, von Zeitplanungszusatzinformationen abhängig von der Größe der aufzufüllenden Daten (S340).

2. Datenübertragungsverfahren nach Anspruch 1, wobei ein Erzeugen, durch die Endgerätevorrichtung, eines Transportblocks, der die Zeitplanungszusatzinformation übermittelt, Folgendes umfasst:
Erzeugen, durch die Endgerätevorrichtung, des Transportblocks gemäß den Zeitplanungsinformationen und Übermitteln der zu übertragenden Daten und der Zeitplanungszusatzinformationen in dem Transportblock (S400).

3. Datenübertragungsverfahren nach Anspruch 1, wobei:
der Transportblock mit einem Nachrichtentextkörper versehen ist, der Nachrichtentextkörper mit einem ersten Feld versehen ist und die Zeitplanungszusatzinformationen in dem ersten Feld angeordnet sind.

4. Datenübertragungsverfahren nach Anspruch 3, wobei:
der Transportblock ferner mit einem Nachrichtenkopf versehen ist, der dem Nachrichtentextkörper entspricht, der Nachrichtenkopf mit einem zweiten Feld versehen ist und das zweite Feld mit ersten Daten versehen ist, die konfiguriert sind, um einen Typ der Zeitplanungszusatzinformationen anzugeben.

5. Datenübertragungsverfahren nach Anspruch 4, wobei:
mehr als zwei Nachrichtenköpfe bereitgestellt sind, der Nachrichtenkopf ferner mit einem dritten Feld versehen ist und das dritte Feld mit zweiten Daten versehen ist, die konfiguriert sind, um eine Positionsabfolge der mehr als zwei Nachrichtenköpfe anzugeben.

6. Datenübertragungsverfahren nach einem der Ansprüche 1 bis 5, wobei die Zeitplanungszusatzinformationen mindestens eines von Downlink-Messinformationen, ersten Informationen, die eine Endgerätevorrichtungskapazität angeben, zweite Informationen, die eine Datenübertragungseigenschaft angeben, oder Zeitplanungsinformationen, die von der Endgerätevorrichtung beantragt werden, umfassen.

7. Endgerätevorrichtung (100), umfassend:
einen Speicher (120), einen Prozessor (110) und ein in dem Speicher (120) gespeichertes und von dem Prozessor (110) ausführbares Computerprogramm, das, wenn es von dem Prozessor (110) ausgeführt wird, den Prozessor (110) veranlasst, das Datenübertragungsverfahren nach einem der Ansprüche 1 bis 6 durchzuführen.

8. Computerlesbares Speichermedium, das eine computerausführbare Anweisung speichert, die, wenn sie von einem Prozessor ausgeführt wird, den Prozessor veranlasst, das Datenübertragungsverfahren nach einem der Ansprüche 1 bis 6 durchzuführen.

## Revendications

1. Procédé de transmission de données, comprenant :
l'acquisition, par un dispositif terminal, d'informations auxiliaires de planification (S100) ; et
la génération, par le terminal, d'un bloc de transport contenant les informations auxiliaires de planification, et la transmission de ce bloc de transport à une station de base via un canal physique partagé de liaison montante, PUSCH, de sorte que la station de base attribue une ressource de planification au dispositif terminal en fonction des informations auxiliaires de planification (S200) ;
**caractérisé en ce que**,
l'acquisition, par un dispositif terminal, d'informations auxiliaires de planification (S100) comprend :
l'acquisition, par le terminal, d'informations de planification provenant de la station de base (S310) ;
la détermination, par le dispositif terminal, d'une taille de données à transmettre en fonction des informations de planification (S320) ;
la détermination, par le dispositif terminal, d'une taille de données à compléter en fonction de la taille des données à transmettre et des informations de planification (S330) ; et
l'acquisition, par le dispositif terminal, d'informations auxiliaires de planification en fonction de la taille des données à compléter (S340).

2. Procédé de transmission de données selon la revendication 1, dans lequel la génération, par le terminal, d'un bloc de transport contenant les informations auxiliaires de planification comprend :
la génération, par le dispositif terminal, du bloc de transport selon les informations de planification, et l'intégration dans ce bloc de transport des données à transmettre ainsi que des informations auxiliaires de planification (S400).

3. Procédé de transmission de données selon la revendication 1, dans lequel :
le bloc de transport comporte un corps de message, ce corps de message comporte un premier champ, et les informations auxiliaires de planification sont placées dans ce premier champ.

4. Procédé de transmission de données selon la revendication 3, dans lequel :
le bloc de transport comporte en outre un en-tête de message correspondant au corps du message ; cet en-tête de message comporte un deuxième champ ; et ce deuxième champ contient des premières données destinées à indiquer un type d'informations auxiliaires de planification.

5. Procédé de transmission de données selon la revendication 4, dans lequel :
si plus de deux en-têtes de message sont fournis, l'en-tête de message comporte en outre un troisième champ, et ce troisième champ contient des données secondaires configurées pour indiquer l'ordre de position de ces plus de deux en-têtes de message.

6. Procédé de transmission de données selon l'une quelconque des revendications 1 à 5, dans lequel les informations auxiliaires de planification comprennent au moins l'une des informations suivantes : des informations de mesure de liaison descendante, des premières informations indiquant une capacité d'un dispositif terminal, des deuxièmes informations indiquant une caractéristique de transmission de données, ou des informations de planification demandées par le terminal.

7. Dispositif terminal (100), comprenant : une mémoire (120), un processeur (110) et un programme informatique stocké dans la mémoire (120) et exécutable par le processeur (110) qui, lorsqu'il est exécuté par le processeur (110), amène le processeur (110) à exécuter le procédé de transmission de données selon l'une quelconque des revendications 1 à 6.

8. Support de stockage lisible par ordinateur contenant une instruction exécutable par ordinateur qui, lorsqu'elle est exécutée par un processeur, amène ce dernier à exécuter le procédé de transmission de données selon l'une quelconque des revendications 1 à 6.
